**Europäisches Patentamt**

**European Patent Office**

**Office européen des brevets**

(11) Numéro de publication : **0 468 854 A1**

(12) # DEMANDE DE BREVET EUROPEEN

(21) Numéro de dépôt : **91401983.1**

(22) Date de dépôt : **16.07.91**

(51) Int. Cl.⁵ : **B29C 39/12, B29C 67/24, B32B 25/04**

(30) Priorité : **25.07.90 FR 9009498**

(43) Date de publication de la demande :
**29.01.92 Bulletin 92/05**

(84) Etats contractants désignés :
**BE DE ES GB IT LU NL SE**

(71) Demandeur : **HUTCHINSON S.A. une Société Anonyme dotée d'un Conseil de Surveillance et d'un Directoire**
**2, rue Balzac**
**F-75008 Paris (FR)**

(72) Inventeur : **Lagarde, Jean**
**1, impasse des Acacias**
**F-95260 Beaumont-Sur-Oise (FR)**
Inventeur : **Riquier, Didier**
**9, rue Anatole France**
**F-95340 Persan (FR)**
Inventeur : **Carpentier, Eric**
**3, Place de l'Europe**
**F-95660 Champagne S/Oise (FR)**
Inventeur : **Boni, Bernard**
**26, rue des Martyrs**
**F-95660 Champagne S/Oise (FR)**

(74) Mandataire : **Orès, Bernard et al**
**Cabinet ORES 6, Avenue de Messine**
**F-75008 Paris (FR)**

(54) **Procédé de fabrication de pièces composites incorporant un elastomère et pièces obtenues par mise en oeuvre de ce procédé.**

(57)    L'élastomère est rendu solidaire à l'aide d'un agent d'adhérisation d'une partie constitutive de la pièce préalablement réalisée en un matériau constitué par un mélange d'élastomère et d'une matière plastique choisie parmi les polyamides, les TPE (élastomères thermoplastiques), les TPS (thermoplastiques de structure) et les TPR (thermoplastiques renforcés).
    Application : Roue, galets, patins de véhicules chenillés, etc... à semelle ou bandage de caoutchouc appliqué sur un support.

EP 0 468 854 A1

FIG.1

L'invention a pour objet un procédé de fabrication de pièces composites incorporant un élastomère et les pièces obtenues par mise en oeuvre de ce procédé.

L'industrie fait application, dans des domaines très variés, de pièces composites incorporant du caoutchouc rendu solidaire d'un support métallique. Il en est ainsi, par exemple, dans des pièces rotatives comme des galets ou des roues comprenant une jante métallique sur laquelle est fixé un bandage de caoutchouc ou dans des organes d'accouplement élastiques tels que ceux connus dans la technique sous le nom de SILENTBLOC (une Marque déposée de la Société HUTCHINSON), ou encore des supports antivibratoires, des dispositifs de fixation et d'articulation élastiques, mais également, et sans qu'aucun caractère limitatif ne soit attaché à cette énumération, des galets de chenilles ou des patins d'engins chenillés, aussi bien ceux du domaine civil que ceux du domaine militaire, comme des chars de combat.

Pour de telles pièces, le poids introduit par la partie métallique (surtout lorsque celle-ci est réalisée en acier comme cela est le cas pour les patins de véhicules chenillés) est fréquemment un obstacle à leur utilisation ou, lorsque cette utilisation a effectivement lieu, un inconvénient que les utilisateurs cherchent à pallier. Aussi a-t-on proposé de remplacer la partie métallique de ces pièces ou dispositifs par des matériaux dits "composites", à base de résine ou matière plastique armée, par exemple ceux connus dans la technique sous le nom de "carbone-époxy". Si l'on obtient effectivement à l'aide de ces matériaux des réductions considérables de poids, le prix est considérablement accru, d'une part, et, d'autre part, les caractéristiques souhaitées ne sont pas toujours obtenues, tant en ce qui concerne la résistance mécanique, la tenue en température, ou la déformation sous effort, etc...

Le problème se pose donc de fournir un procédé et des pièces composites incorporant un élastomère dont les caractéristiques de poids soient proches de celles des pièces à base de matériaux du type des "carbone-époxy", mais sans en atteindre le coût, d'une part, et qui, d'autre part, aient les qualités des pièces en partie métallique mais sans en avoir le poids.

C'est, par conséquent, un but de l'invention de fournir un procédé qui permette d'apporter une solution au problème posé, dont la mise en oeuvre soit simple et qui puisse être conduit avec des machines usuelles, en particulier celles de la technique d'injection.

Le problème est résolu dans un procédé de fabrication de pièces "composites" incorporant un élastomère par le fait que, selon l'invention, ledit élastomère est rendu solidaire à l'aide d'un agent d'adhérisation d'une partie constitutive de ladite pièce préalablement réalisée en un matériau constitué par un mélange d'élastomère et d'une matière plastique choisie par les polyamides, les TPE (élastomères thermo-plastiques), les TPS (thermoplastiques de structure) et les TPR (thermoplastiques renforcés).

Dans une forme de réalisation préférée, ladite partie fabriquée préalablement à son adhérisation à l'élastomère est avantageusement réalisée par les techniques RIM (Reaction Injection Molding), c'est-à-dire par injection, sous forme liquide, des matériaux constitutifs du mélange dans un moule où s'effectue la réaction et la mise en forme concomitante.

Selon une autre caractéristique de l'invention, le procédé prévoit également d'incorporer, dans la partie de la pièce composite en mélange d'élastomère et de matière plastique préformée comme indiqué ci-dessus, une armature de renfort, le plus avantageusement un mat de fibres de verre longues.

Dans une forme de réalisation préférée, la partie à base d'un mélange de matière plastique et d'élastomère résulte de la mise en forme d'un matériau commercialisé par la Société DSM sous la marque commerciale "NYRIM" et qui est un mélange d'élastomère et de polyamide, plus précisément de "Nylon 6 " et d'élastomère tandis que l'élastomère rendu solidaire de ladite partie est à base de caoutchouc naturel, de polybutadiène, de polyisoprène, ou d'un coupage de ces élastomères.

Dans un mode d'exécution préféré, l'agent d'adhérisation est choisi parmi les solutions de polymères organiques chlorés et de charges dispersées dans des solvants organiques comme ceux commercialisés sous les dénominations commerciales "CHEMOSIL" ou "THIXON".

L'invention a également pour objet les pièces obtenues par la mise en oeuvre de ce procédé et, en particulier, des pièces rotatives comme des galets ou des roues, des supports anti-vibratoires, des supports, articulations et accouplements élastiques, des patins d'engins chenillés, etc...

Dans ce dernier cas, l'invention est d'un intérêt particulier en ce qui concerne les pièces de poids importants, comme les patins de chars de combat.

L'invention sera bien comprise par la description qui suit, faite à titre d'exemple et en référence au dessin annexé, dans lequel :

– la figure 1 est une vue partie en coupe, partie en élévation, d'un patin de char réalisé par le procédé de l'invention ;

– la figure 2 est une vue en coupe selon la ligne II-II de la figure 1.

Un procédé selon l'invention, pour la fabrication de pièces "composites" incorporant un élastomère, comme du caoutchouc, prévoit essentiellement de fabriquer d'abord en un matériau constitué par un mélange d'élastomère et d'une matière plastique choisie parmi les polyamides, les TPE (élastomères thermo-plastiques ), les TPS (thermoplastiques de structure) et TPR (thermoplastiques renforcés), une première partie de la pièce composite, de mettre en forme une seconde partie de ladite pièce en un matériau élastomère comme du caoutchouc naturel, du polybutadiène, du polyisoprène, ou un coupage de ces élastomères, a rapporter sur les zones destinées à venir en contact des deux parties un agent d'adhérisation et à procéder ensuite à la vulcanisation des parties ainsi réunies entre elles.

Dans une forme de réalisation préférée, la première partie est réalisée par les techniques RIM, avantageusement avec incorporation dans le moule de coulée du mélange d'élastomère et de matière plastique d'un ou de mat(s) de fibres de verre longues, -qui permettent de réduire l'influence de la température sur la dilatation-, et également, le cas échéant, un ou des insert(s), destiné(s), par exemple, à la fixation de la pièce composite sur un organe de montage.

Comme agent d'adhérisation, l'invention prévoit d'utiliser des solutions de polymères organiques chlorés et de charges dispersées dans des solvants organiques du type de ceux commercialisés sous les noms commerciaux de "CHEMOSIL" ou "THIXON".

EXEMPLE :

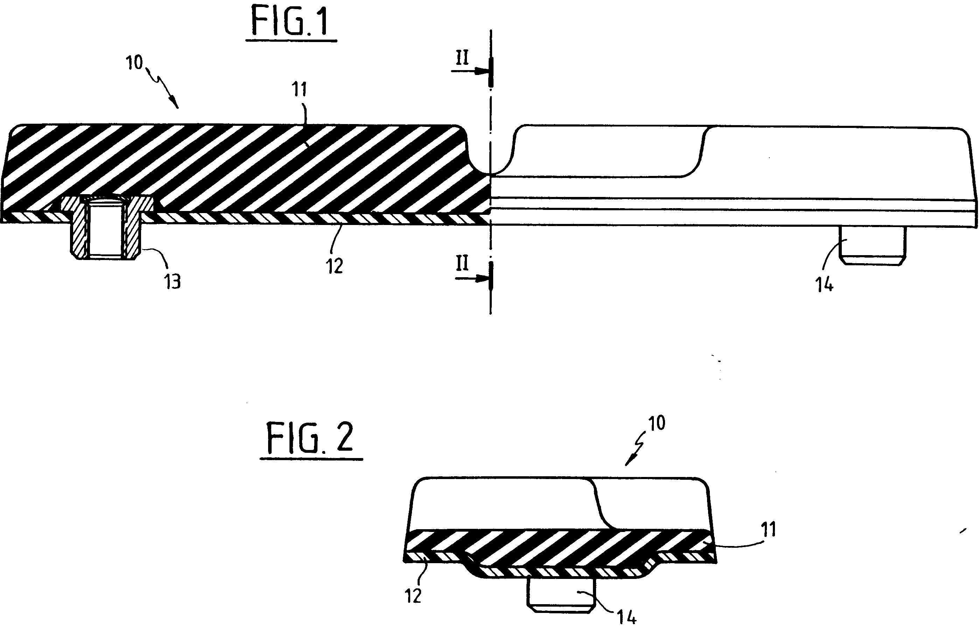

Un patin de char 10, figures 1 et 2, comportant une semelle de roulement 11 en caoutchouc comme du caoutchouc naturel, du polybutadiène, du polyisoprène ou un coupage de ces trois élastomères est rapporté, par le procédé selon l'invention, sur une semelle 12 obtenue en coulant dans un moule, par les techniques RIM, un matériau commercialisé par la Société DSM, sous la marque "NYRIM" et qui est un mélange de "Nylon 6" et d'un élastomère.

Préalablement à l'injection de "NYRIM", le moule est garni d'un mat de fibres de verre longues, d'une épaisseur d'environ trois millimètres (non représenté) et de courts inserts taraudés en acier 13 et 14, destinés à recevoir les vis d'assemblage aux chenilles du char.

Après obtention de la semelle 12, celle-ci est placée dans un moule où l'élastomère constitutif de la semelle de roulement 11 est injecté après qu'ait été rapporté sur la semelle 12 un agent d'adhérisation comme du "CHEMOSIL" ou du "THIXON". L'ensemble est alors vulcanisé, à une température de l'ordre de 140°C, pendant environ 40 minutes.

On obtient après refroidissement un patin dont l'épaisseur de caoutchouc est de l'ordre de 30 millimètres, c'est-à-dire inférieur de 5 à 6 millimètres à l'épaisseur des patins correspondants comportant une semelle en acier, tandis que cette semelle, -dont l'épaisseur peut-être de l'ordre de 5 à 15 millimètres-, est par contre légèrement supérieure à celle des semelles en acier.

Le gain de poids d'un patin de char selon l'invention, par rapport à un patin à semelle en acier, peut-être de l'ordre de 1,5 kilo réduisant ainsi le poids d'un char à 300 patins d'environ 450 kilos.

Les essais effectués sur de tels patins montrent qu'ils ont une excellente résistance à l'arrachement des inserts et une parfaite adhérence du caoutchouc à la semelle, des essais de pelage amenant, en fait, une rupture du caoutchouc 11, mais pas de séparation cohésive à l'interface de la semelle et du caoutchouc.

Le comportement au choc des patins est excellent et leur coût comparable à celui des patins usuels, tout en étant très nettement inférieur à celui qui résulterait de la fabrication de la semelle 12 en un matériau du type "carbone-époxy".

**Revendications**

1. Procédé de fabrication de pièces "composites" incorporant un élastomère, caractérisé en ce que ledit élastomère est rendu solidaire à l'aide d'un agent d'adhérisation d'une partie constitutive de ladite pièce préalablement réalisée en un matériau constitué par un mélange d'élastomère et d'une matière plastique choisie parmi les polyamides, les TPE (élastomères thermoplastiques), les TPS (thermoplastiques de structure) et les TPR (thermoplastiques renforcés).

2. Procédé selon la Revendication 1, caractérisé en ce que la partie réalisée préalablement à son adhérisation à l'élastomère est avantageusement obtenue par les techniques RIM (Reaction Injection Molding).

3. Procédé selon la Revendication 1 ou la Revendication 2, caractérisé en ce qu'on incorpore dans la partie préalablement réalisée de la pièce composite en un mélange d'élastomère et de matière plastique une armature de renfort, comme un mat de fibres de verres longues.

4. Procédé selon l'une quelconque des Revendications précédentes, caractérisé en ce que la partie à base d'un mélange de matière plastique et d'élastomère résulte de la mise en forme d'un matériau commercialisé par la Société DSM, sous la marque "NYRIM" et constitué par un mélange d'élastomère et de "Nylon 6", tandis que la partie en élastomère est à base de caoutchouc naturel, de polybutadiène, de polyisoprène ou d'un coupage de ces trois élastomères.

5. Procédé selon l'une quelconque des Revendications précédentes, caractérisé en ce que l'agent d'adhérisation est choisi parmi les solutions de polymères organiques chlorées et de charges dispersées dans les solvants organiques comme ceux commercialisés sous les noms de "CHEMOSIL" ou "THIXON".

6. Pièces composites obtenues par la mise en oeuvre du procédé selon l'une quelconque des Revendications précédentes, notamment pièces rotatives comme des galets ou des roues, des supports antivibratoires, des supports, articulations et accouplement élastiques, des patins d'engins chenillés ou analogues.

7. Pièce selon la Revendication 6, notamment patin de char, caractérisé en ce qu'il comprend une semelle de roulement (11) en élastomère comme du caoutchouc naturel, du polybutadiène, du polyisoprène ou un coupage de ces trois élastomères d'une épaisseur de l'ordre de trente millimètres solidarisée par adhérisation à une semelle (12) dans laquelle sont noyés des inserts taraudés en acier (13), d'une épaisseur comprise entre cinq et quinze millimètres et en un mélange de polyamide comme du "Nylon 6" et d'un élastomère.

## FIG.1

10  11  II

12  13  14

## FIG. 2

10  11  12  14

EP 0 468 854 A1

Office européen
des brevets

**RAPPORT DE RECHERCHE EUROPEENNE**

Numero de la demande

EP 91 40 1983

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | JAPANESE PATENTS GAZETTE, semaine 8735, section Ch, classe A, résumé no. 87-247861 [35], Derwent Publications Ltd, Londres, GB; & JP-A-62 171 581 (TOKAWA GUM SEISAKUS) | 1,6 | B 29 C 39/12<br>B 29 C 67/24<br>B 32 B 25/04 |
| A | DE-A-1 729 779 (Dr. PLATE GmbH) * Revendication 1 * | 1,6 | |
| A | FR-A-1 165 122 (IMPERIAL CHEMICAL IND.) | 1,6 | |
| A | FR-A-2 131 836 (PNEUMATIQUES, CAOUTCHOUC MANUFACTURE ET PLASTIQUES KLEBER-COLOMBES) | 1,6 | |
| A | FR-A-2 207 467 (CATERPILLAR TRACTOR CO.) | 1,6 | |
| A | GB-A-1 233 547 (ELASTOMER ENG. LTD) | 1,6 | **DOMAINES TECHNIQUES RECHERCHES (Int. Cl.5)** |
| A | JAPANESE PATENT GAZETTE, semaine 8750, section Ch, classe A, accession no. 87-352536 [50], Derwent Publications Ltd, London, GB; & JP-A-62 256 640 (KURARAY K.K.) 09-11-1987 | 1,6 | B 29 D<br>B 29 C<br>B 32 B |

Le présent rapport a été établi pour toutes les revendications

| Lieu de la recherche | Date d'achèvement de la recherche | Examinateur |
|---|---|---|
| LA HAYE | 04-11-1991 | ROBERTS P.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

7